# EUROPEAN PATENT SPECIFICATION

(11) **EP 2 329 992 B1**
(45) Date of publication and mention of the grant of the patent: **07.08.2013**
(21) Application number: 10193787.8
(22) Date of filing: 06.12.2010
(51) Int. Cl.: B60R 7/10, B60R 13/02, B60N 3/02

(54) **Load bearing trim element for a vehicle**
Lasttragendes Verkleidungselement für ein Fahrzeug
Élément de garniture de support de charge pour véhicule

(30) Priority: 04.12.2009 GB 0921242
(43) Date of publication of application: 08.06.2011
(73) Proprietor: Nissan Motor Manufacturing (UK) Ltd., Cranfield Bedfordshire MK43 0DB (GB)
(72) Inventor: Pickett, Kevin, Cranfield, Bedfordshire MK43 0DB (GB)

(56) References cited:
- EP-A1- 0 520 167
- EP-A1- 1 769 979
- EP-A2- 2 062 783
- US-A1- 2004 084 918

## Description

The present invention relates to a trim element for a vehicle, the trim element having an integral protruding structure, for example a hook or a handle. The invention also relates to a method of making a trim element. The invention can also be adapted to suit a variety of other items that require a closure panel.

Many private and commercial vehicles are provided with interior hooks, for example coat hooks and carry hooks, that may be used for carrying coats, groceries in carrier bags, takeaway meals and so on. Coat hooks are used to hang up coats and jackets to prevent them becoming soiled and creased from contact with the floor. Carry hooks may be used to suspend goods in an upright condition and prevent them from falling over or sliding around during movement of the vehicle. Other hooks may be provided for securing items in the luggage compartment. Hooks may be provided either in the passenger compartment, for example at the top of the "B" roof pillar, or in the luggage compartment.

Usually, the hook is formed as a separate moulded component that is attached with a screw to a plastic trim panel or the underlying metal structure of the vehicle body. Providing a hook thus requires additional components and results in increased assembly time. Both of these factors affect the overall manufacturing cost of the vehicle. If the hook is omitted, a blanking plate may then be required to cover the fixing hole. This also gives rise to costs. Similar problems arise in relation to other protruding structures such as grab handles.

A hook for a shopping bag in a vehicle luggage area , according to the preamble of claim 1, is known from EP 2 062 783. This construction relies on a second overlapping trim panel to obscure the aperture around the hook. A hook moulded onto a window pillar trim is disclosed in EP 0 520 617. However, this disclosure is incidental to the main invention; and no guidance is given as to how the hook may be moulded. A retractable coat hook unit is disclosed in US 2004/084 918. However, this unit is a separate part to the trim panel to which it is secured; and itself comprises at least three discrete components.

It would be desirable to form a protruding structure such as a hook as an integral component of a moulded plastic trim panel. No additional components would then be required and additional assembly costs would be avoided. In practice however forming a hook as an integral component on a trim panel is difficult: in order to form the inner surface of the hook the mould tool would require a movable part that extends through the panel during moulding and then retracts through the panel after the moulded part has been formed. This would leave a hole in the trim panel and it would then be necessary to fit a blanking plate over the hole to seal the hole and provide a finished appearance. This would lead to additional costs, both for production of the blanking plate and also during assembly, and the end result may be unsightly.

Similar considerations apply to other protruding structures, for example grab handles. Such handles may carry a continuous load, as some passengers habitually hang one of their arms on a grab handle for support and/or reassurance.

It is an object of the present invention to provide a trim panel with an integral protruding structure that mitigates one or more of the aforesaid disadvantages. in particular, a preferred object of the invention is to provide a trim panel with an integral closure member, thus avoiding the need for a separate closure member.

According to the present invention there is provided an interior trim element for a vehicle, the trim element being arranged to support a load carried within the vehicle and comprising:
(a) a moulded panel having an inner surface and an outer surface, the outer surface in use facing the interior of the vehicle;
(b) a protruding structure connected to the outer surface of the panel and which extends outwards from the outer surface of the panel for supporting the load; and:
(c) an aperture formed in the panel adjacent the protruding structure; characterized in that:
   an integral closure member is connected to the panel, and is configured for pivoting movement from an open condition in which it extends away from the inner surface of the panel, to a closed condition in which it covers the aperture.

By forming the protruding structure as an integral moulded part of the trim element, the need for separate components and additional assembly work is avoided, thereby reducing the overall cost of manufacturing the vehicle. The integral closure member allows the aperture required by the mould tool during moulding to be covered and hidden, again without requiring additional components. As the closure member is already fixed to the panel in the correct position for covering the aperture, it can be moved very easily to the closed condition after moulding, either manually or by machine.

The protruding structure, such as a hook, preferably includes an outer part that extends substantially parallel to the plane of an adjacent part of the panel, and an inner part that connects the outer part of the protruding structure to the adjacent part of the panel. Advantageously, the outer part of the protruding structure includes one or more strengthening formations. Advantageously, the inner part of the protruding structure includes one or more strengthening formations. The strengthening formations may for example consist of ribs formed on the inner face of the protruding structure. These increase the strength and rigidity of the protruding structure.

Advantageously, the trim element includes a locking element, which preferably comprises a resilient detent. The detent is preferably configured to engage an edge of the closure member. This allows the closure member to be snapped easily and positively into the closed condition. Furthermore, the trim element is preferably designed so that when it is attached to the vehicle body, the closure member is retained in the closed position by engagement with an adjacent part of the vehicle body. The closure member cannot then be opened while the trim element is attached to the vehicle.

The trim element may include one or more support mountings, each said support mounting comprising an integral moulded part of the trim element. Advantageously, the locking element is carried by a support mounting.

The closure member may include a relieved (or raised) portion that is configured to substantially fill the aperture when the closure member is in the closed condition, to reduce the visual impact of the aperture.

Preferably, the trim element comprises a moulded plastics material.

The protruding structure may be in the form of a hook or a support handle, or "grab handle", for a vehicle occupant.

According to another aspect of the invention there is provided a vehicle including a trim element according to any one of the preceding statements of invention.

According to another aspect of the invention there is provided a method of making a trim element according to any one of the preceding statements of invention, the method comprising moulding the trim element in a mould tool having a retractable tool part that during moulding extends through the aperture in the moulded panel, opening the mould tool and retracting the retractable tool part from the aperture, and ejecting the moulded trim element from the mould tool.

Advantageously, the retractable tool part forms the shape of an inner surface of the protruding structure.

Advantageously, the retractable tool part is retracted from the outer surface to the inner surface of the moulded trim element.

Advantageously, the method includes pivoting the closure member from the open condition to the closed condition, and preferably locking the closure member in the closed configuration with an integral locking element.

Advantageously, the method includes attaching the trim element to a vehicle.

According to another preferred aspect of the invention there is provided a trim element for a vehicle, the trim element comprising a decorative outer surface, a load bearing structure extending from the decorative outer surface, a support structure extending from an inner surface behind the outer surface, and an integrated closure member, wherein a through hole is formed between the inner and outer surfaces adjacent to the load bearing structure and is arranged to provide access to a tool for forming the support structure, and the integrated closure member extends from the inner surface and is arranged to pivot about an edge adjacent to the through hole after the trim element is removed from the mould.

Various embodiments of the invention will now be described by way of example with reference to the accompanying drawings, in which:
Figure 1 is an isometric view of a trim element according to a first embodiment of the invention, showing part of the trim element *in situ* on a roof pillar of a vehicle;
Figure 2 is a side elevation of the trim element;
Figure 3 is an isometric view showing the rear of the trim element, with a closure member in an open condition;
Figure 4 is an isometric view showing the rear of the trim element, with the closure member in a closed condition;
Figure 5 is a front elevation of the trim element;
Figure 6 is a simplified side section on line A-A of Figure 5, showing the closure member in a closed condition (in solid lines) and in an open condition (in broken lines), and
Figure 7 is a plan view of a trim element according to a second embodiment of the invention, the trim element carrying a grab handle.

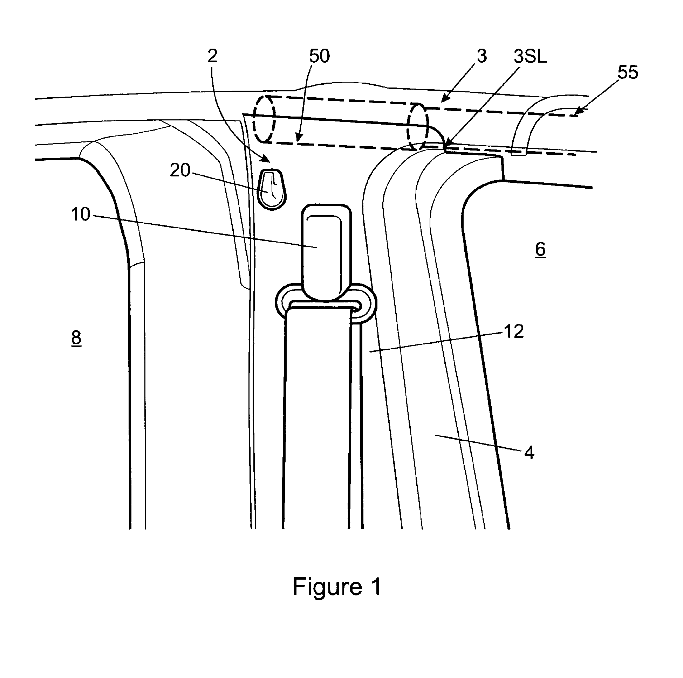

The trim element 2 is shown *in situ* in Figure 1, attached to a roof pillar 4 of a vehicle. The trim element 2 wraps around and encloses the roof pillar 4. In this instance, the roof pillar 4 is the "B" pillar of the vehicle, which is located between the front side window 6 and the rear side window 8. Also shown in Figure 1 but not forming part of the invention is the upper mounting 10 for a seat belt.

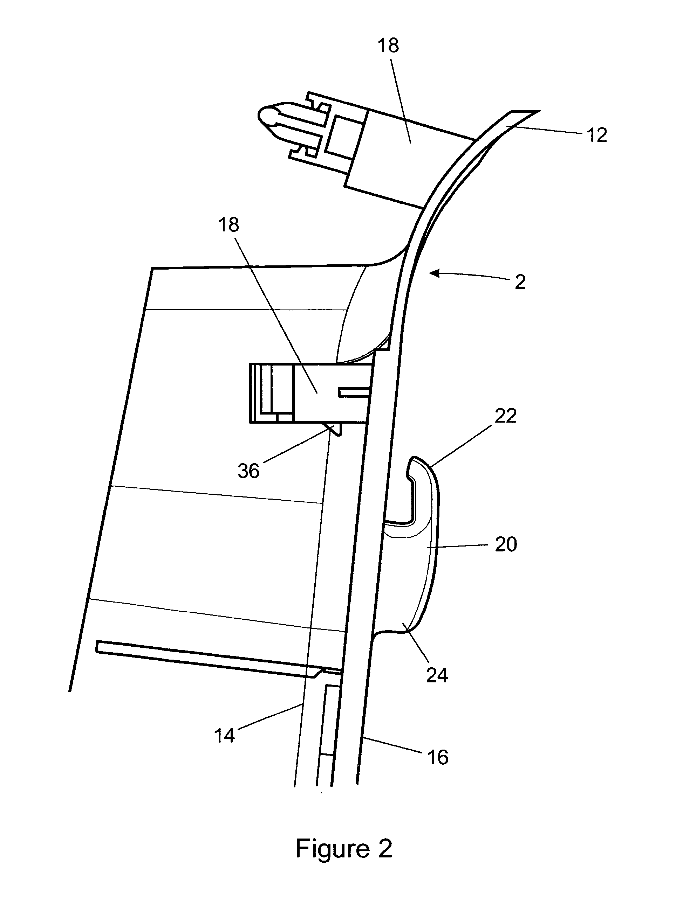

The trim element 2 comprises a panel 12 having an inner surface 14 (Fig. 2) that *in situ* faces towards a supporting structure of the vehicle (in this case, the roof pillar 4) and that is therefore hidden from view, and an outer surface 16 that *in situ* faces into the interior of the vehicle and is exposed to view. The outer surface generally carries a decorative finish and is conventionally referred to as the "A" surface, whereas the inner surface may includes marks formed by moulding injection points and is conventionally termed the "B" surface. The trim element 2 is a moulded component made of a suitable plastics material, for example polypropylene or ABS, that is formed by any suitable moulding process, for example injection moulding.

Figure 1 also shows a headliner 3. As this trim piece is typically formed from a fabric material, its outer edges may have unsightly protruding threads and/or fluff.

It is therefore conventional for the trim element 2 to be shaped and fitted so as to hide the edge of the headliner 3 to give a neat finish. The split line where the edge of trim panel 2 covers an edge of headliner 3 is shown in bold as 3SL. Other parts such as rubber seals for the door aperture may cover edge parts of the headliner, but these interfaces are known in the art and thus will not be discussed further.

Figure 1 also shows in dashed lines, a curtain airbag inflator 40 and a curtain airbag 45. Inflator 40 is typically mounted at the top of roof pillar 4, while curtain airbag 45 runs forward along the top of side window 6. In the event of a vehicle collision, curtain airbag 45 inflates, displacing headliner 3 in order to cover the side window 6. In these circumstances, it is not objectionable for the edge of the headliner to be seen; but conversely, it is essential for the comfort of vehicle occupants that trim element 2 is not detached from roof pillar 4. Therefore, trim element 2 must have robust support mountings holding the trim element to the roof pillar.

As shown in Figure 2, a plurality of support mountings 18 are provided on the inner face of the trim element 2, in order to support trim panel 12. The mountings 18 may be attached to the metal bodywork of the vehicle, for example with clips, to support and retain the trim element 2 in position. The support mountings 18 are formed as integral moulded parts of the trim element; and are designed to be strong enough not just to retain the trim element during ordinary vehicle use, but also to ensure that it does not detach from the vehicle body structure when a curtain airbag is fired. The design of the support mountings 18 is conventional and they will not therefore be described in detail.

The trim element 2 includes a hook 20 that is formed as an integral moulded part of the trim element. In this example, the hook 20 is designed for use as a coat hook, allowing a coat to be hung behind one of the front seats. It will be appreciated however that the hook may take various different forms and be designed for other uses. For example, it may be designed for use as a carry hook for carrying groceries or a takeaway meal in a carrier bag.

Instead of a hook, the trim element 2 may include a different protruding structure that extends outwards from the outer surface. The protruding structure may for example be a load bearing structure such as a handle.

It should be noted that the trim element 2 may be designed for use elsewhere in the vehicle, including either the passenger compartment or the luggage compartment of the vehicle.

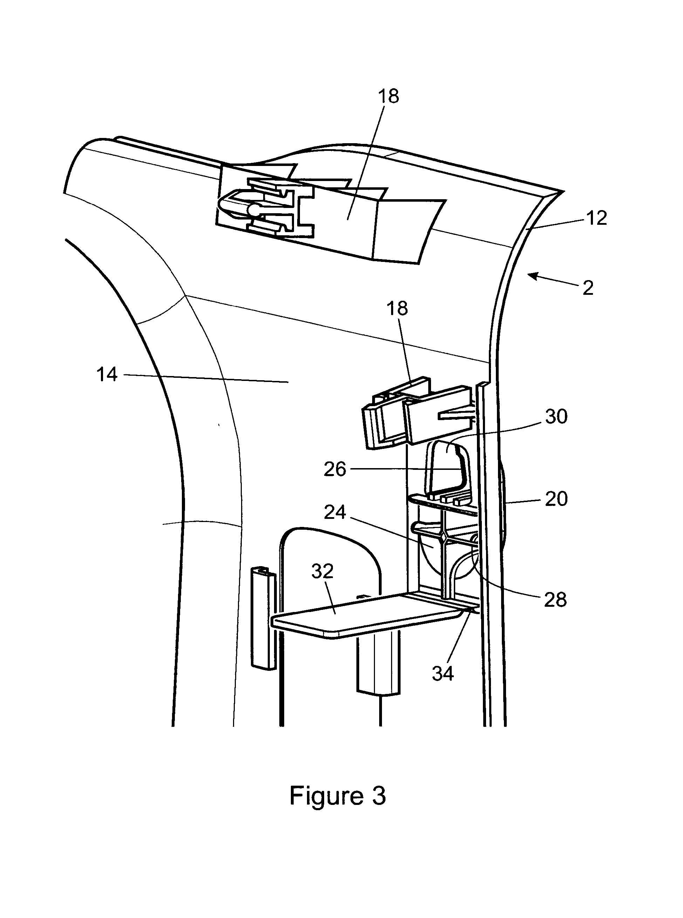

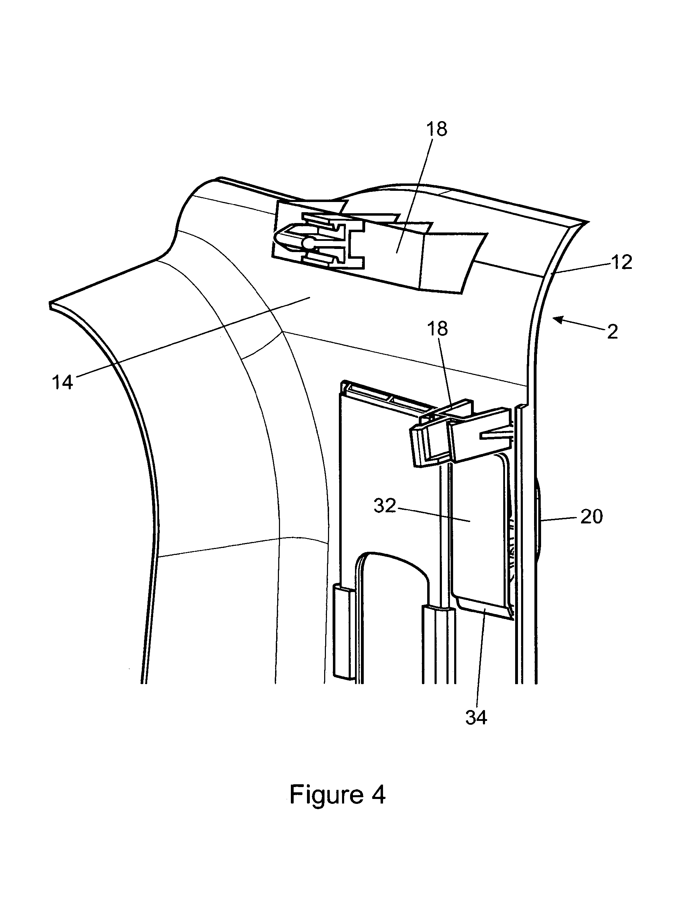

In this example, the hook 20 includes an outer part 22 that extends upwards and substantially parallel to the plane of the adjacent part of the panel 12, and an inner part 24 that connects the outer part 22 of the hook to the adjacent part of the panel 12. The outer part 22 includes on its inner face a plurality of ribs 26 (Fig. 3) that provide strength and rigidity. The inner part 24 is substantially hollow and opens through the inner surface 14 of the panel 12. The inner part 24 of the hook also includes supporting ribs 28 for strength and rigidity, as shown in Figures 3 and 4.

In order to form the inner face of the hook and the ribs 26, 28, the mould tool must include a retractable part that extends during the moulding process through the panel 12 from the inner surface of the panel. When the trim element has been formed, this retractable part of the mould tool is withdrawn, allowing the moulded component to be removed from the mould. The retractable part of the mould tool therefore leaves an aperture 30 in the part of the panel 12 adjacent to the outer part 22 of the hook 20. The tool also forms the hollow interiors and/or any other surface feature such as texturing of the inner part 24 and the outer part 22 of the hook 20.

The trim element 2 also includes a closure member 32 in the form of a blanking plate that comprises an integral moulded part of the panel 12. The closure member 32 is connected to the panel 12 by an integral live hinge 34, which in this case is located on the inner surface 14 of the panel, just below the position of the hook 20. The live hinge 34 comprises a web of the plastics material, which is of reduced thickness so that it allows the closure member 32 to pivot between an open condition in which it extends away from the inner surface 14 of the panel (as shown in Figure 3) and a closed condition in which it covers the aperture 30 (as shown in Figure 4). The mould tool is designed to form the closure member 32 in the open condition as shown in Figure 3, thus allowing the movable part of the mould tool to form the inner face of the hook 20. After the trim element has been formed, the closure member 32 can be pivoted about the live hinge 34 to the closed condition shown in Figure 4.

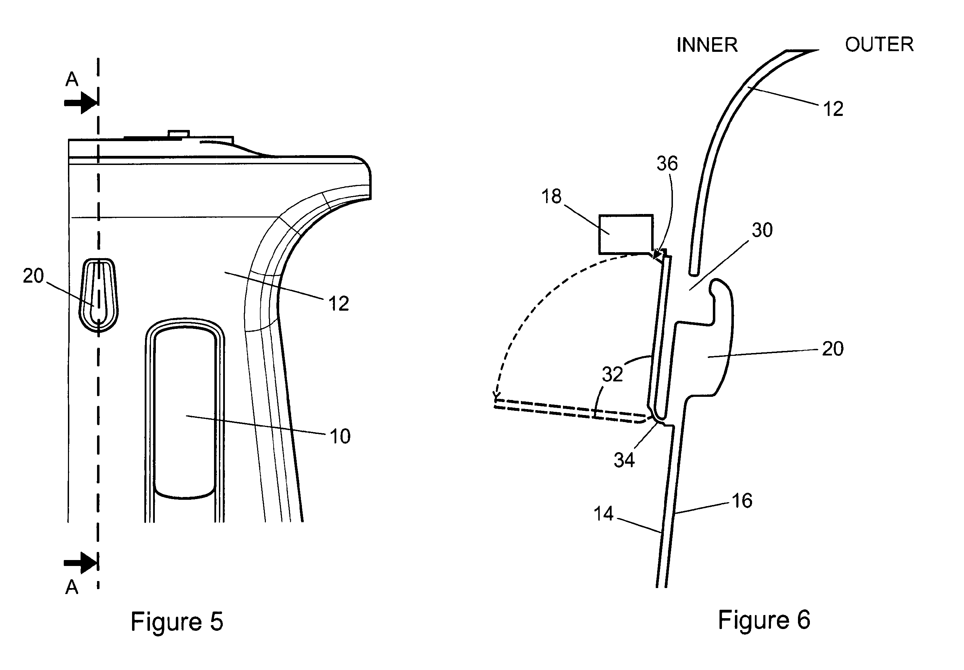

The trim element 2 includes a locking element 36 that is configured to engage the closure member 32 when it is in the closed condition and retain it in that condition. In this embodiment, the locking element 36 comprises a resilient detent that is formed on one of the mountings 18 adjacent the upper edge of the aperture 30. As shown in Figure 6, the locking element 36 engages the upper edge of the closure member 32 to retain it in the closed condition. It should be understood however that the locking element 36 may take other forms: for example, the locking element may comprise complementary locking formations that are formed around the edges of the closure member 32 and the aperture 30 and come into engagement with each other when the closure member 32 is located in the closed condition. When the closure member 32 is in the closed condition, it seals the aperture 30 and prevents any view through the aperture of the underlying vehicle structure.

The trim element 2 therefore includes a panel 12 and a hook 20 that is moulded as an integral part of the trim element in a single moulding operation. This avoids the need for both a separate hook and a fastener such as a screw, and avoids the assembly costs associated with fitting a separate hook. Once the trim element 2 has been removed from the mould, the closure member 32 can be pivoted easily to the closed condition to seal the aperture 30. This can be done manually or by machine. The trim element 2 can then be clipped to the metal structure of the vehicle body in a conventional manner. As a result, part costs and assembly costs are significantly reduced.

The trim element is preferably designed so that when it is attached to the vehicle body, the closure member 32 is retained in the closed position by engagement with, or abutment against an adjacent part of the vehicle body. The closure member cannot then be opened while the trim element is attached to the vehicle.

This prevents the closure member 32 from being forced open accidentally, for example by exerting pressure on the closure member.

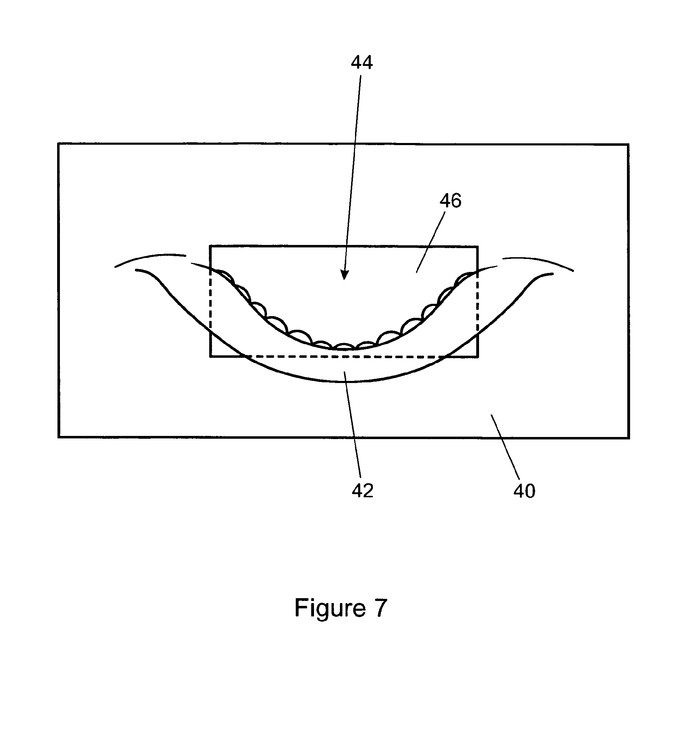

Another embodiment of the invention is shown in Figure 7, in which the trim element comprises a plate 40 that carries an assist grip or grab handle 42 for a vehicle occupant. Such handles are often only provided for passengers, but may be provided for a driver to assist in ingress to, and egress from, the vehicle. An aperture 44 is provided in the plate 40 adjacent the handle 42, which is closed by a closure member 46. The closure member 46 is attached to the inner surface of the plate 40 by an integral live hinge (not shown) and includes a locking element (not shown), both of which may be similar to the corresponding parts of the first trim element shown in Figures 1 to 6.

During moulding, a retractable part of the mould tool extends through the aperture 44 to form the inner surface of the handle 42. After moulding, the retractable part of the tool retracts through the aperture 44 and the mould tool opens to eject the moulded part. The closure member 46 is then closed to hide the aperture 44.

Various modifications of the invention described above are of course possible. For example, the closure member 32 may include a relieved (or raised) portion that is matched to the shape of the aperture and extends into the aperture 30 when the closure member is in the closed condition. This relieved portion may have an external surface that has the same decorative surface finish as the outer surface of the panel and is configured to lie substantially flush with the outer surface of the panel, so as to fill the aperture 30 and reduce its visual impact.

The trim element may comprise any suitable part of the interior trim of the vehicle. For example, it may be a roof pillar trim panel, a door panel, part of the fascia or one of the vehicle seats, or a panel in the luggage compartment. The panel may take any shape, according to its intended location. The hook may also take various different forms and be designed for carrying a variety of different articles, or a different protruding structure such as a handle may be provided.

## Claims

1. An interior trim element (2) for a vehicle, the trim element being arranged to support a load carried within the vehicle and comprising:
(a) a moulded panel (12, 40) having an inner surface (14) and an outer surface (16), the outer surface in use facing the interior of the vehicle;
(b) a protruding structure (20, 42) connected to the outer surface (16) of the panel (12, 40) and which extends outwards from the outer surface of the panel for supporting the load; and:
(c) an aperture (30, 44) formed in the panel (12, 40) adjacent the protruding structure (20, 42);
**characterized in that**:
an integral closure member (32, 46) is connected to the panel (12, 40), and is configured for pivoting movement from an open condition in which it extends away from the inner surface (14) of the panel (12, 40), to a closed condition in which it covers the aperture (30,44).

2. A trim element (2) according to claim 1, in which the protruding structure (20, 42) includes an outer part (22) that extends substantially parallel to the adjacent part of the panel (12, 40), and an inner part (24) that connects the outer part (22) of the protruding structure (20, 42) to the adjacent part of the panel.

3. A trim element (2) according to claim 1 or claim 2, in which the outer part (22) and/or the inner part (24) of the protruding structure (20, 42) includes one or more strengthening formations (26, 28).

4. A trim element (2) according to any one of the preceding claims, including a locking element (36) comprising an integral moulded part of the trim element (2), said locking element (36) being configured to engage and retain the closure member (32, 46) in the closed condition;
said locking element (36) also comprising a resilient detent, said detent being configured to engage an edge of the closure member (32,46).

5. A trim element (2) according to any one of the preceding claims, wherein the closure member (32, 46) is connected to the inner surface (14) by a live hinge (34).

6. A trim element (2) according to any one of the preceding claims, wherein the closure member (32, 46) includes a relieved or raised portion that is configured to substantially fill the aperture (30, 44) when the closure member (32, 46) is in the closed condition.

7. A trim element (2) according to any one of the preceding claims, including one or more panel support mountings (18) provided on the inner surface (14) of the panel (12, 40), each panel support mounting (18) comprising an integral moulded part of the trim element (2).

8. A trim element (2) according to claim 7, wherein the one or more panel support mountings (18) are arranged to ensure retention of the trim element (2) when an adjacent curtain airbag (45) is deployed.

9. A trim element (2) according to any one of the preceding claims and comprising a moulded plastics material.

10. A trim element (2) according to any one of the preceding claims, wherein said protruding structure comprises a hook (20).

11. A trim element (2) according to any one of claims 1 to 9, wherein said protruding structure comprises a support handle (42) for a vehicle occupant.

12. A vehicle including a trim element (2) according to any one of the preceding claims.

13. A method of making a trim element (2) according to any one of claims 1 to 11, the method comprising moulding the trim element (2) in a mould tool having a retractable tool part that during moulding extends through the aperture (30, 44) in the moulded panel (12, 40), opening the mould tool and retracting the retractable tool part from the aperture (30, 44), and ejecting the moulded trim element (2) from the mould tool.

14. A method according to claim 13, in which the retractable tool part forms the shape of an inner surface of the protruding structure (20, 42), and said retractable tool part is retracted from the outer surface (16) to the inner surface (14) of the moulded trim element (2).

15. A method according to claim 13 or claim 14, including pivoting the closure member (32, 46) from the open condition to the closed condition.

16. A method according to any one of claims 13 to 15, including attaching the trim element (2) to a vehicle.

## Patentansprüche

1. Innenraumverkleidungselement (2) für ein Fahrzeug, wobei das Verkleidungselement dazu angeordnet ist, eine in dem Fahrzeug getragene Last zu halten und Folgendes umfasst:
(a) eine geformte Platte (12, 40) mit einer inneren Oberfläche (14) und einer äußeren Oberfläche (16), wobei die äußere Oberfläche in Gebrauch dem Innenraum des Fahrzeugs zugewandt ist;
(b) eine vorstehende Struktur (20, 42), die mit der äußeren Oberfläche (16) der Platte (12, 40) verbunden ist und die sich von der äußeren Oberfläche der Platte nach außen erstreckt, um die Last zu halten, und:
(c) eine Öffnung (30, 44), die benachbart der vorstehenden Struktur (20, 42) in der Platte (12, 40) gebildet ist;
**dadurch gekennzeichnet, dass**:
ein integriertes Verschlusselement (32, 46) mit der Platte (12, 40) verbunden ist und für die Schwenkbewegung von einem offenen Zustand, in dem es sich von der inneren Oberfläche (14) der Platte (12, 40) weg erstreckt, zu einem geschlossenen Zustand, in dem es die Öffnung (30, 44) abdeckt, ausgebildet ist.

2. Verkleidungselement (2) nach Anspruch 1, wobei die vorstehende Struktur (20, 42) einen äußeren Teil (22), der sich im Wesentlichen parallel zu dem benachbarten Teil der Platte (12, 40) erstreckt, und einen inneren Teil (24), der den äußeren Teil (22) der vorstehenden Struktur (20, 42) mit dem benachbarten Teil der Platte verbindet, umfasst.

3. Verkleidungselement (2) nach Anspruch 1 oder Anspruch 2, wobei der äußere Teil (22) und/oder der innere Teil (24) der vorstehenden Struktur (20, 42) eine oder mehrere verstärkende Gebilde (26, 28) umfasst.

4. Verkleidungselement (2) nach einem der vorangehenden Ansprüche, umfassend ein Verriegelungselement (36), das einen integrierten geformten Teil des Verkleidungselements (2) umfasst, wobei das Verriegelungselement (36) dazu ausgebildet ist, mit dem Verschlusselement (32, 46) in dem geschlossenen Zustand in Eingriff zu treten und dieses zurückzuhalten;
wobei das Verriegelungselement (36) außerdem eine elastische Raste umfasst, wobei die Raste dazu ausgebildet ist, mit einem Rand des Verschlusselements (32, 46) in Eingriff zu treten.

5. Verkleidungselement (2) nach einem der vorangehende Ansprüche, wobei das Verschlusselement (32, 46) durch ein Folienscharnier (34) mit der inneren Oberfläche (14) verbunden ist.

6. Verkleidungselement (2) nach einem der vorangehenden Ansprüche, wobei das Verschlusselement (32, 46) einen verjüngten oder erhöhten Abschnitt umfasst, der dazu ausgebildet ist, die Öffnung (30, 44) im Wesentlichen auszufüllen, wenn sich das Verschlusselement (32, 46) im geschlossenen Zustand befindet.

7. Verkleidungselement (2) nach einem der vorangehenden Ansprüche, umfassend eine oder mehrere Plattenhalterungen (18), die an der inneren Oberfläche (14) der Platte (12, 40) vorgesehen sind, wobei die Plattenhalterungen (18) jeweils ein integriertes geformtes Teil des Verkleidungselements (2) umfassen.

8. Verkleidungselement (2) nach Anspruch 7, wobei die eine bzw. die mehreren Plattenhalterungen (18) dazu angeordnet sind, das Zurückhalten des Verkleidungselements (2) sicherzustellen, wenn ein benachbarter Vorhang-Airbag (45) aufgeblasen wird.

9. Verkleidungselement (2) nach einem der vorangehenden Ansprüche und ein geformtes Kunststoffmaterial umfassend.

10. Verkleidungselement (2) nach einem der vorangehenden Ansprüche, wobei die vorstehende Struktur einen Haken (20) umfasst.

11. Verkleidungselement (2) nach einem der Ansprüche 1 bis 9, wobei die vorstehende Struktur einen Haltegriff (42) für einen Fahrzeuginsassen umfasst.

12. Fahrzeug, umfassend ein Verkleidungselement (2) nach einem der vorangehenden Ansprüche.

13. Verfahren zum Herstellen eines Verkleidungselements (2) nach einem der Ansprüche 1 bis 11, wobei das Verfahren Folgendes umfasst: Formen des Verkleidungselements (2) in einem Formwerkzeug mit einem zurückziehbaren Werkzeugteil, das sich während des Formens durch die Öffnung (30, 44) in der geformten Platte (12, 40) erstreckt; Öffnen des Formwerkzeugs und Zurückziehen des zurückziehbaren Werkzeugteils aus der Öffnung (30, 44); und Auswerfen des geformten Verkleidungselements (2) aus dem Formwerkzeug.

14. Verfahren nach Anspruch 13, wobei das zurückziehbare Werkzeugteil die Form einer inneren Oberfläche der vorstehenden Struktur (20, 42) bildet und das zurückziehbare Werkzeugteil von der äußeren Oberfläche (16) zu der inneren Oberfläche (14) des geformten Verkleidungselements (2) zurückgezogen wird.

15. Verfahren nach Anspruch 13 oder Anspruch 14, umfassend das Schwenken des Verschlusselements (32, 46) von dem offenen Zustand in den geschlossenen Zustand.

16. Verfahren nach einem der Ansprüche 13 bis 15, umfassend das Anbringen des Verkleidungselements (2) an einem Fahrzeug.

## Revendications

1. Elément de garniture intérieur (2) pour véhicule, l'élément de garniture étant agencé pour supporter une charge transportée dans le véhicule et comprenant :
(a) un panneau moulé (12, 40) ayant une surface interne (14) et une surface externe (16), la surface externe en service faisant face à l'intérieur du véhicule ;
(b) une structure saillante (20, 42) connectée à la surface externe (16) du panneau (12, 40) et s'étendant vers l'extérieur depuis la surface externe du panneau pour supporter la charge ; et :
(c) une ouverture (30, 44) formée dans le panneau (12, 40) adjacente à la structure saillante (20, 42) ;
**caractérisé en ce que** :
un élément de fermeture intégré (32, 46) est connecté au panneau (12, 40), et est configuré pour effectuer un mouvement pivotant depuis un état ouvert dans lequel il s'écarte de la surface interne (14) du panneau (12, 40) sur un état fermé dans lequel il recouvre l'ouverture (30, 44).

2. Elément de garniture (2) selon la revendication 1, dans lequel la structure saillante (20, 42) comporte une partie externe (22) qui s'étend sensiblement parallèlement à la partie adjacente du panneau (12, 40), et une partie interne (24) qui connecte la partie externe (22) de la structure saillante (20, 42) à la partie adjacente du panneau.

3. Elément de garniture (2) selon la revendication 1 ou la revendication 2, dans lequel la partie externe (22) et/ou la partie interne (24) de la structure saillante (20, 42) comporte une ou plusieurs formations de renforcement (26, 28).

4. Elément de garniture (2) selon l'une quelconque des revendications précédentes, comportant un élément de verrouillage (36) comprenant une partie moulée intégrée de l'élément de garniture (2), ledit élément de verrouillage (36) étant configuré pour s'engager avec l'élément de fermeture (32, 46) et le retenir dans l'état fermé ;
ledit élément de verrouillage (36) comprenant aussi un cliquet élastique, ledit cliquet étant configuré pour s'engager avec un bord de l'élément de fermeture (32, 46).

5. Elément de garniture (2) selon l'une quelconque des revendications précédentes, dans lequel l'élément de fermeture (32, 46) est connecté à la surface interne (14) par une charnière articulée (34).

6. Elément de garniture (2) selon l'une quelconque des revendications précédentes, dans lequel l'élément de fermeture (32, 46) comporte une partie en relief ou surélevée qui est configurée pour sensiblement remplir l'ouverture (30, 44) quand l'élément de fermeture (32, 46) est dans l'état fermé.

7. Elément de garniture (2) selon l'une quelconque des revendications précédentes, comportant une ou plusieurs montures de support de panneau (18) fournies sur la surface interne (14) du panneau (12, 40), chaque monture de support de panneau (18) composant une pièce moulée intégrée de l'élément de garniture (2).

8. Elément de garniture (2) selon la revendication 7, dans lequel les une ou plusieurs montures de support de panneau (18) sont agencées pour garantir la retenue de l'élément de garniture (2) quand un rideau gonflable adjacent (45) est déployé.

9. Elément de garniture (2) selon l'une quelconque des revendications précédentes, et comprenant un matériau plastique moulé.

10. Elément de garniture (2) selon l'une quelconque des revendications précédentes, dans lequel ladite structure saillante comprend un crochet (20).

11. Elément de garniture (2) selon l'une quelconque des revendications 1 à 9, dans lequel ladite structure saillante comprend une poignée de support (42) à l'intention d'un occupant du véhicule.

12. Véhicule comportant un élément de garniture (2) selon l'une quelconque des revendications précédentes.

13. Procédé de fabrication d'un élément de garniture (2) selon l'une quelconque des revendications 1 à 11, le procédé comprenant le moulage de l'élément de garniture (2) dans un outil de moule ayant une pièce d'outil rétractable qui durant le moulage s'étend à travers l'ouverture (30, 44) dans le panneau moulé (12, 40), l'ouverture de l'outil de moule et la rétraction de la pièce d'outil rétractable de l'ouverture (30, 44), et l'éjection de l'élément de garniture moulé (2) de l'outil de moule.

14. Procédé selon la revendication 13, dans lequel la pièce d'outil rétractable forme le profil d'une surface interne de la structure saillante (20, 42), et ladite pièce d'outil rétractable est rétractée de la surface externe (16) vers la surface interne (14) de l'élément de garniture moulé (2).

15. Procédé selon la revendication 13 ou la revendication 14, comportant le pivotement de l'élément de fermeture (32, 46) de l'état ouvert à l'état fermé.

16. Procédé selon l'une quelconque des revendications 13 à 15, comportant la fixation de l'élément de garniture (2) sur un véhicule.
